# EUROPÄISCHE PATENTSCHRIFT

(11) **EP 2 825 365 B1**
(45) Veröffentlichungstag und Bekanntmachung des Hinweises auf die Patenterteilung: **07.02.2018**
(21) Anmeldenummer: 13712492.1
(22) Anmeldetag: 01.03.2013
(51) Int. Cl.: B29C 49/78, B29C 49/06, G01N 21/90

(54) **Verfahren und Vorrichtung zur Ermittlung von fehlerhaften Vorformlinge und verwandtes Rechnerverfahren.**
Process and device for detecting faulty preforms and related calculation process.
Procédé et appareil de détection de preformes défectueuses et procédé de calcul associé.

(30) Priorität: 12.03.2012 DE 102012102073
(43) Veröffentlichungstag der Anmeldung: 21.01.2015
(73) Patentinhaber: A2O AG, 8274 Tägerwilen (CH)
(72) Erfinder: KLAIBER, Franz, 78564 Wehingen (DE); NOVAK, Peter, CH-8274 Tägerwilen (CH)
(74) Vertreter: Patentanwälte und Rechtsanwalt Weiß, Arat & Partner mbB
(86) Internationale Anmeldenummer: PCT/EP2013/054135
(87) Internationale Veröffentlichungsnummer: WO 2013/135496

(56) Entgegenhaltungen:
- EP-A1- 1 479 454
- WO-A1-2007/031194
- WO-A1-2011/007378

## Beschreibung

Die Erfindung betrifft ein Kontrollmodul nach dem Oberbegriffs des Anspruchs 1 und ein Verfahren zur Kontrolle von PET-Flaschenvorformlingen.

### STAND DER TECHNIK

Aus dem Stand der Technik wird in diesem Zusammenhang auf die EP 1 479 454 A1 hingewiesen. Dort ist eine Apparatur zur Qualitätskontrolle von Vorformlingen für PET-Flaschen offenbart, die eine Bildaufnahme des Vorformlings mit einem weiteren Bild abgleicht.

Weiter wird auf die WO 2011/007378 A1 hingewiesen, welche ebenfalls ein System zum Aussortieren fehlerhafter PET-Flaschen- Vorformlinge offenbart.

Zuletzt wird auf die WO 2007/0311194 A1 hingewiesen. Dort ist ein Verfahren zur Qualitätskontrolle eines streckgeblasenen Kunststoffbehälters durch Inspektion seines Bodens offenbart.

Nach dem gegenwärtigen Stand der Technik werden PET-Flaschenvorformlinge von drei oder mehr Seiten gleichzeitig erfasst, um entsprechende Fehlerquellen der PET-Flaschenvorformlinge zu erkennen und entsprechende PET-Flaschenvorformlinge auszusortieren. Zur gleichzeitigen Bilderfassung von drei oder noch mehr Seiten muss zwischen den PET-Flaschenvorformlingen ein entsprechender Abstand belassen werden, damit die bilderfassenden Kameras tatsächlich ein Rundumbild des PET-Flaschenvorformlings erfassen können. Ausserdem wird im Stand der Technik vielmehr eine seitliche Aufnahme des PET-Flaschenvorformlings aufgenommen. Eine Rundum-Kontrolle erfolgt nicht.

### AUFGABE

Aufgabe der vorliegenden Erfindung ist es, eine Vorrichtung zu schaffen, welche zum eine ein einfache und kostengünstige Möglichkeit bietet, Fehler in PET-Flaschenvorformlingen zu erfassen und dabei die Bearbeitungsgeschwindigkeit zu erhöhen. Ausserdem soll erreicht werden, dass aufgrund der Vorrichtung ein genaues und zielsicheres Aussortieren von nicht geeigneten PET-Flaschenvorformlingen erreicht wird und eine Rundum-Kontrolle erfolgen kann.

### LÖSUNG DER AUFGABE

Zur Lösung der Aufgabe führen die Merkmale der Ansprüche 1, ....

Die Erfindung betrifft ein modularkonzipiertes System, sowie seine Funktionsmodule zur kontinuierlichen, optischen Inspektion von zylindrischen Objekten mit integrierter Sortierung der fehlerhaften (NiO= nicht in Ordnung) und der nicht fehlerhaften (iO= in Ordnung) zu erreichen.

Bei den zylindrischen Objekten handelt es sich vor allem um PET-Flaschenvorformlinge, sogenannte Preforms. Bei dieser Erfindung geht es primär um das Inspektionsmodul und dessen spezifischen Merkmalen und Ausprägungen. In diesem Zusammenhang soll weniger die bildtechnische Verarbeitung und Auswertung auf Software-Ebene angesprochen werden, als vielmehr die technisch-maschinelle Umsetzung der Lösung der Aufgabe. Im Weiteren soll auch die Gesamtkonfiguration und die Layout-Kompaktheit des Systems erwähnt werden. Hierzu gehören Preformförderer, Inspektionsmodul und Peripherie.

Bei der Preforminspektion werden diverse Kriterien, wie beispielsweise die Grösse des Preforms geprüft und dabei mit festgelegten Soll-Werten verglichen. Besteht hierbei eine untolerierbare Abweichung, werden diese fehlerhaften Preforms ausgeschieden. Weiterhin werden geometrische Merkmale, wie Länge, Durchmesser, Ovalität, Form oder Wandstärke überprüft.

In diesem Zusammenhang werden auch Material-/Produktionsfehler der PET-Flaschenvorformlinge, wie Kratzer und Kerben im Bereich der Dichtfläche oder Lage und Länge des Einspritzpunktes oder unvollständig geschmolzenes Material entdeckt. Daneben sollen auch Blasen im PET-Flaschenvormling-Material sowie Ölspritzer oder Brenner oder Verunreinigungen entdeckt werden können.

In besondere soll eine Mündungsprüfung erfolgen können, das bedeutet, dass jegliche Arten von Fehlern im Mündungsring entdeckt werden können sollen. Dies kann im Einzelnen ein fehlerhafter Durchmesser oder eine Abweichung vom Soll-Wert-Durchmesser oder das Auffinden von Kratzer und Kerben bedeutet. Weiter soll eine Kavitätenerkennung in der Art geschehen, dass die PET-Flaschenvorformlinge anhand festgelegten Kavitätennummern aussortiert werden können. Auch eine Farbprüfung soll erfolgen. Hierbei sollen Farb- und Intensitätsabweichungen kontrolliert werden können. Daneben soll auch eine Prüfung rund um den Einspritzpunkt durchgeführt werden können. Hierbei soll insbesondere auf Mulden und Löcher geachtet werden.

Weiterhin wird darauf hingewiesen, dass auch Verunreinigungen wie Kontamination in Boden- und/oder Gewindebereichen oder Kontamination im Bereich des Anspritzpunktes entdeckt werden können sollen.

Die hier vorgestellte Erfindungsidee findet in erster Linie in zwei Einsatzbereichen Anwendung. Die eine Anwendung ist derart gestaltet, dass Inline eine erfindungsgemässe Vorrichtung mit Spritzgiessmaschinen kombiniert werden, so dass unmittelbar nach der Preformherstellung eine Kontrolle durchgeführt wird und mangelhafte Preforms in einem separaten Behälter aussortiert werden und fehlerfreie Preforms in einen anderen Behälter transportiert werden. Eine weitere Anwendung ist derart gestaltet, dass die erfindungsgemässe Vorrichtung oder das erfindungsgemässe Verfahren inline mit einer Streckblasmaschine kombiniert wird. Das bedeutet im Einzelnen, dass kurz vor der Herstellung der PET-Flaschen eine solche Kontrolle durchgeführt werden kann. Hierbei wird zunächst eine geordnete Weitergabe der Preforms an die Streckblasmaschine nach erfolgreicher Prüfung durchgeführt. Mangelhafte Preforms werden bei diesem Vorgehen in einen separaten Behälter aussortiert.

Der genaue Aufbau der erfindungsgemässen Vorrichtung ist derart gestaltet, dass zunächst ein geordneter oder ungeordneter Transport zu dem erfindungsgemässen Kontrollmodul erfolgt. Vor dem Einfahren in die Kontrolle werden die Preforms entsprechend orientiert und separiert. Die Inspektion findet hierbei durch die Schritte: Sichtung, Auswertung und Auswurf statt. Das Kontrollmodul ist in der Weise gestaltet, dass es ohne weiteres als integrierter Bestandteil einer Preformfördermaschine eingesetzt werden kann. Hierbei ist es unbeachtlich, ob das Kontrollmodul in eine Inline-Inspektion für eine Spritzgiessmaschine oder als Inline-Inspektion für eine Streckblasmaschine eingesetzt wird.

Das Kontrollmodul ist derart gestaltet, dass es folgende Schritte beinhaltet:
- Zuführung der längs ausgerichteten Preforms
- Aufnehmen der Preforms (Luft eintakten/synchonisieren)
- Zentrieren der Preforms auf die Längsachsenmittigkeit
- Präsentation der Preforms vor der Kamera respektive Kameras (freie Sicht über die Gesamtlänge)
- Rotation der zentrierten Preforms, so dass eine Sicht von allen Seiten möglich ist
- Umgreifen der Preforms, so dass die Präsentation des Mündungsbereichs der Preforms vor einer weiteren Kamera erfolgen kann. Anschliessendes Weichen-/Auswerfersystem für die Aussortierung von NiO befundenen Objekten und Weiterleitung von iO befundenen Objekten an die weiteren Stationen der Herstellung einer PET-Flasche.

### Figurenbeschreibung

Weitere Vorteile, Merkmale und Einzelheiten der Erfindung ergeben sich aus den anliegenden Figuren; diese zeigen in
Figur 1a eine Draufsicht auf eine erfindungsgemässe Kontrolleinheit;
Figur 1b eine schematische Seitenansicht einer erfindungsgemässen Kontrolleinheit;
Figur 2 eine vergrösserte Draufsicht auf einen Synchronisationsbereich der erfindungsgemässen Kontrolleinheit;
Figur 3a eine schematische Darstellung eines Teils der erfindungsgemässen Kontrolleinheit;
Figur 3b eine geschnittene Seitenansicht eines Teils aus Figur 3a;
Figur 4 eine Draufsicht auf einen ersten Kamera-Aufnahmebereich der erfindungsgemässen Kontrolleinheit;
Figur 5 eine schematische Draufsicht auf einen Teil aus Figur 4;
Figur 6 eine schematische Draufsicht auf einen Kamera-Erfassungsbereich aus dem Stand der Technik;
Figur 7 eine weitere schematische Seitenansicht des ersten Kamera-Aufnahmebereichs aus Figur 4;
Figur 8 eine schematische Ansicht von schräg oben auf einen Übergabebereich der erfindungsgemässen Kontrolleinheit;
Figur 9 eine weitere Seitenansicht der Figur 8;
Figur 10 eine geschnittene Seitenansicht eines Teils der Figur 9;
Figur 11 eine Draufsicht auf einen zweiten Kamera-Erfassungsbereich einer erfindungsgemässen Kontrolleinheit;
Figur 12 eine andere Ansicht auf den Bereich nach Figur 11;
Figur 13 eine schematisch vergrösserte Draufsicht auf einen ersten Kamera-Erfassungsbereich mit teilweise geschnitten dargestellten Merkmalen;
Figur 14 eine Seitenansicht eines Teils einer erfindungsgemässen Kontrolleinheit;
Figur 15 eine teilweise geschnitten dargestellte seitliche Draufsicht auf den Teil der erfindungsgemässen Kontrolleinheit nach Figur 14;
Figur 16 eine geschnittene Seitenansicht eines Teils einer erfindungsgemässen Kontrolleinheit nach den Figuren 14 oder 15.

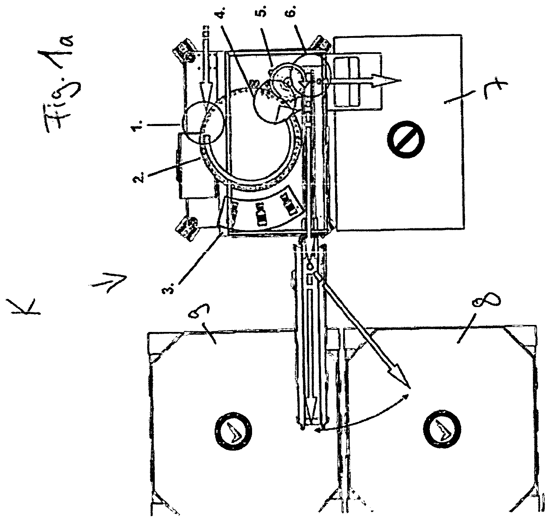

In Figur 1a ist eine Zuführung 1 gezeigt. Die Zuführung 1 stellt einen Bereich dar, in dem die Preforms der Kontrolleinheit K zugeführt werden. Hierzu wird eine synchronisierte Aufnahme der Preforms einer Mündungsdichtfläche erreicht. Das Zuführen ist synchronisiert und Luft-eingetaktet. Als weiterer Bereich des erfindungsgemässen Kontrollmoduls ist eine dynamische Selbstzentrierung 2 gezeigt. Die dynamische Selbstzentrierung dient dem Festsaugen der Preforms auf die Längsachsemittigkeit der Saugscheibe.

Weiter ist in Figur 1a ein Bereich 3 zu erkennen. Dort werden seitliche Bildaufnahmen der Preforms durchgeführt. Weiter ist ein Übergabebereich 4 gezeigt. Dort findet ein Transfer bzw. ein Umgriff der Preforms statt, so dass ein Haltern von oben in ein Halten von der Seite umgewandelt wird.

Anschliessend ist ein zweiter Kamera-Aufnahmebereich 5 zu erkennen. An diesem zweiten Kamera-Aufnahmebereich 5 wird eine Bildaufnahme des Preforms von oben durchgeführt. Anschliessend ist eine Auswurfsstation Ziffer 6 gezeigt, welche dazu dient, die fehlerhaften Preforms in ein Behältnis 7 zu werfen und die nicht-fehlerhaften Preforms in eines der Behältnisse 8, 9 zu transportieren. Der Transport wird durch ein nicht näher in Figur 1a gezeigtes Transportband durchgeführt.

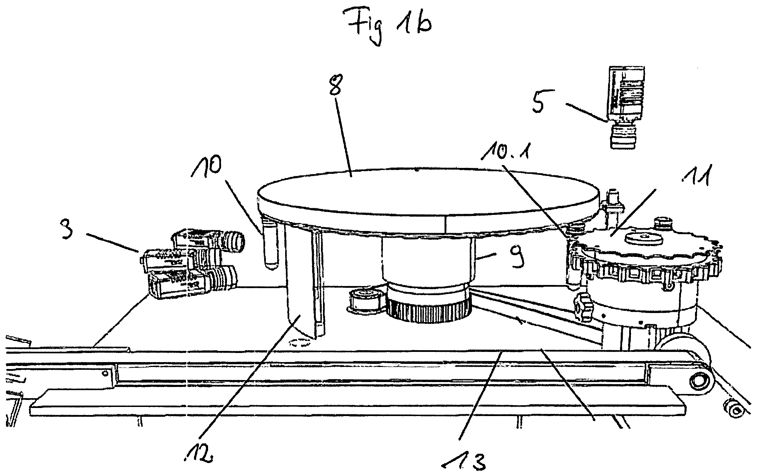

Figur 1b zeigt nun eine vergrösserte Seitenansicht einer erfindungsgemässen Kontrolleinheit. Dort ist ein Saugscheibenkranz 8 zu erkennen. Dieser Saugscheibenkranz rotiert um die Achse 9 und befördert dabei ein Preform 10 an dem ersten Kamera-Aufnahmebereich 3 vorbei hin zu einem Saugtaschenrad 11. Der erste Kamera-Aufnahmebereich besteht in dem hier gezeigten Ausführungsbeispiel aus drei Hochgeschwindigkeitskameras. Oberhalb des Saugtaschenrads 11 ist der zweite Kameraaufnahmebereich 5 gezeigt. Das Preform 10.1, welches in der Figur 1b gezeigt ist, wird durch den Saugscheibenkranz 8 an das Saugtaschenrad 11 herangeführt und dort durch das Saugtaschenrad 11 von dem Saugscheibenkranz 8 übernommen. Ausserdem ist in Figur 1b eine Beleuchtungsstation 12 und ein Abtransportband 13 zu erkennen.

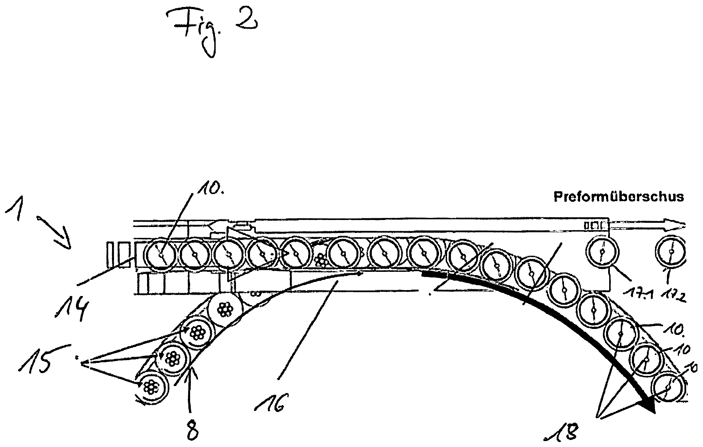

In Figur 2 ist eine vergrösserte Darstellung der Zuführung 1 gezeigt. Hierbei ist zum einen eine geordnete Preformzufuhr 14 offenbart, wobei die Preforms 10 über eine nicht näher beschriebene Bande an den Saugscheibenkranz 8 herangeführt werden. Hierbei werden die Preforms 10 in zunächst leere rotierende Saugscheiben 15 herangeführt. In einem Synchronisationsbereich 16 treffen die leeren rotierenden Saugscheiben 15 dann auf die Preforms 10. Die rotierenden Saugscheiben 15 ziehen dann die Preforms 10 zu sich heran und fixieren diese durch die Rotation der Saugscheiben 15 und mittels Zentrierbanden exakt mittig. Sollte keine exakte Zentrierung stattfinden, werden überschüssige Preforms 17.1, 17.2 abgeführt und anschliessend wieder in die Preformzufuhr 14 eingefädelt. Danach sind rotierende Saugscheiben 18, welche dann eine Preform angesaugt haben, zu erkennen.

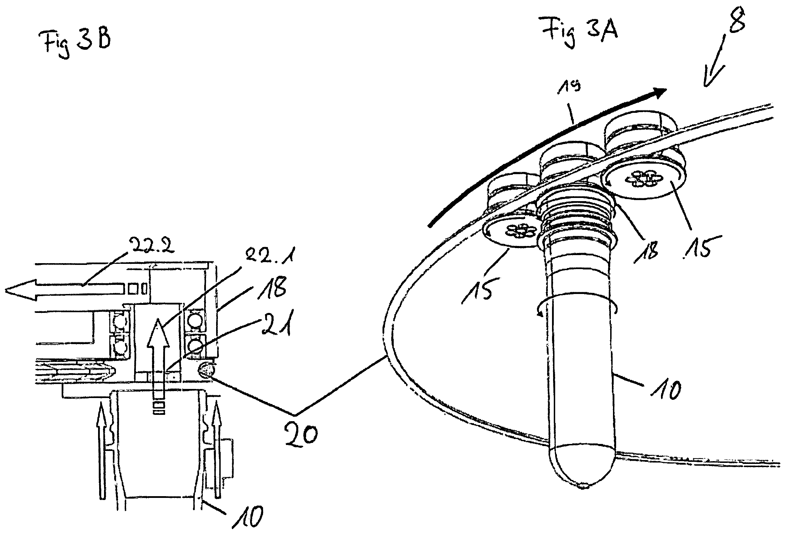

In der Figur 3a sind in einer vereinfachten Darstellung wiederum zwei leere rotierende Saugscheiben 15 gezeigt und eine Preform-haltende Saugscheibe 18 zu erkennen.

Die Rotation des Saugscheibenkranzes 8 ist durch einen Richtungspfeil 19 gezeigt. Die entsprechenden Rotationsrichtungen der Saugscheiben 15, 18 ergeben sich aus der relativen Abwälzbewegung der Saugscheiben 15, 18 im Saugscheibenkranz bezüglich des elastischen Abwälzbandes 20. Hier wird vorteilhaft allein durch die Bewegung des elastischen Abwälzbandes 20 erreicht, dass alle mit dem Abwälzband 20 in Eingriff oder Wirkverbindung stehenden Saugscheiben 15, 18 ebenfalls mitrotieren.

In der Figur 3b ist eine geschnittene Seitenansicht des Bereichs der Figur 3a gezeigt. Dort ist zu erkennen, wie das Abwälzband 20 in eine nicht näher beschriebene Nut der Preform-haltenden Saugscheibe 18 eingelassen ist. Ausserdem ist gezeigt, dass in der Saugscheibe 18 ein Unterdruck herrscht, so dass die Preform 10 an einen Lufteinlassbereich 21 der Preform-haltenden Saugscheibe 18 herangezogen wird. Dies ist auch durch die Luftrichtungspfeile 22.1, 22.2 symbolisch angedeutet. Vorteilhaft hierbei ist der Umstand, dass kein aktiver Antrieb notwendig ist. Vielmehr werden die drehgelagerten Saugscheiben 15, 18 an einer stillstehenden elastischen Abwälzbande, beispielsweise in Form eines fix eingespannten Rundriemens entlangrotiert.

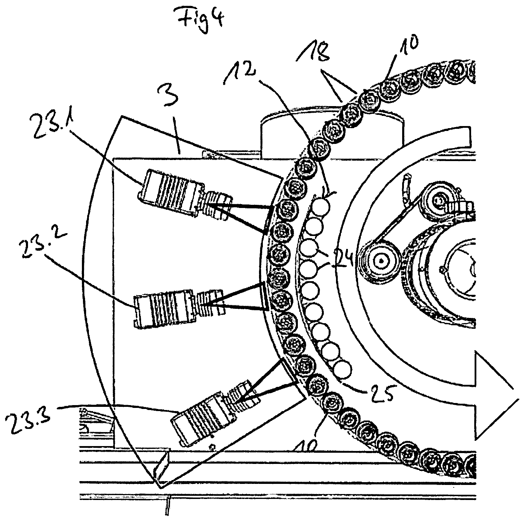

In Figur 4 ist der erste Kamera-Aufnahmebereich 3 von oben darstellt. Der erste Kamera-Aufnahmebereich 3 besteht hierbei aus drei Hochgeschwindigkeitskameras 23.1 bis 23.3. In der Figur 4 sind nun lediglich Preform-haltende Saugscheiben 18 mit entsprechenden Preforms 10 zu erkennen. Ausserdem ist die Beleuchtungsstation 12 besser zu erkennen. Die Beleuchtungsstation 12 besteht aus einer Vielzahl von Leuchtröhren 24, die mit einem lichtdurchlässigen Vlies 25 zusammenwirken, wobei dieses Vlies 25 eine einheitliche Lichtstärkenbildung der verschiedenen Leuchtröhren 24 erreicht. Vorteilhaft hierbei ist, dass ein seitliches Präsentieren der Preforms 10 mit Sicht auf die ganze Preform-Bodylängsansicht.ereicht wird. Durch das Rotieren der Preforms 10 um die eigene Längsachse wird eine Rundum-Bilderfassung auf enger Teilung erreicht. Zuletzt ist vorteilhaft, dass eine optimale Beleuchtung der Preforms 10 von hinten zustande kommt.

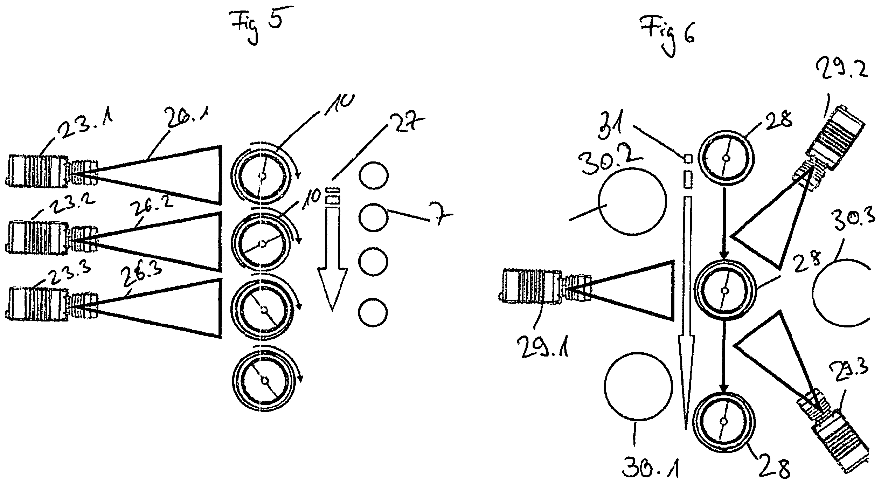

Figur 5 zeigt nun eine erfindungsgemässe vereinfachte Darstellung des ersten Kamera-Aufnahmebereichs 5. In der Figur 5 finden sich wiederum die Hochgeschwindigkeitskameras 23.1 bis 23.3. Ausserdem sind die Kamerasichtwinkel 26.1 bis 26.3 gezeigt. Ausserdem ist zu erkennen, wie die Preforms 10 zwischen der Beleuchtungsstation 12 und den Kameras 23.1 bis 23.3 entlang der Stromflussrichtung 27 rotierende bewegt werden. Hierzu sind entsprechende Pfeile an den Preforms 10 zu erkennen. Dies hat den Vorteil, dass hier eine enge Teilung zwischen den Preforms möglich ist. Die sequentielle Bilderfassung von drei Seiten ein und desselben Preforms 10 aufgrund des rotierenden Vorbeibewegens an den Kameras 23.1 bis 23.3 gewährleistet eine hohe Taktung bei relativ geringer Geschwindigkeit der Stromflussrichtung 27.

Figur 6 zeigt die nach dem Stand der Technik angeordneten Preforms 28, welche nicht rotieren und einen grösseren Abstand zueinander aufweisen müssen, damit die feststehenden Kameras 29.1 bis 29.3 alle Perspektiven des Preforms ausleuchten können. Hierzu werden auch stärkere Lichtquellen 30.1 bis 30.3 benötigt, da die Geschwindigkeit der Stromflussrichtung 31 höher ist als die Stromflussrichtung 27 der erfindungsgemässen Kontrolleinheit. In Figur 5 wir also eine sequentielle Bilderfassung von drei Seiten ermöglicht, in dem das Preform 10 rotierend an den Kameras 23.1 bis 23.3 vorbeigeführt wird. In Figur 6 wird eine gleichzeitige Bilderfassung eines Preforms 28 von drei Seiten auf einmal gezeigt.

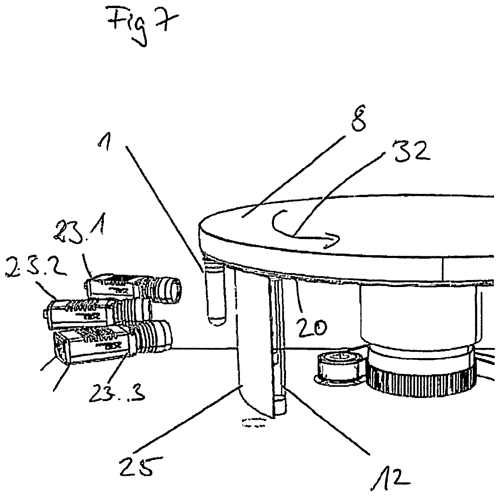

Figur 7 zeigt eine weitere vereinfachte Seitenansicht eines ersten Kameraaufnahmebereicht. Dort ist nochmals gezeigt, wie die Beleuchtungsstation 12 mit dem Vlies 25, welcher auch als Lichtdiffusor ausgebildet sein kann, auf der Unterseite des Saugscheibenkranzes 8 angebracht ist. Der Saugscheibenkranz 8 rotiert mit Hilfe des Abwälzbandes 20 derart, dass das Preform 10 an den drei Hochgeschwindigkeitskameras 25.1 bis 25.3 in Pfeilrichtung 32 rotierend vorbeigeführt wird. Das seitliche Präsentieren der Preforms 10 mit Sicht auf die ganze Preform-Bodylängsansicht ermöglicht es eine Rundum-Bilderfassung auf enger Teilung zu erreichen.

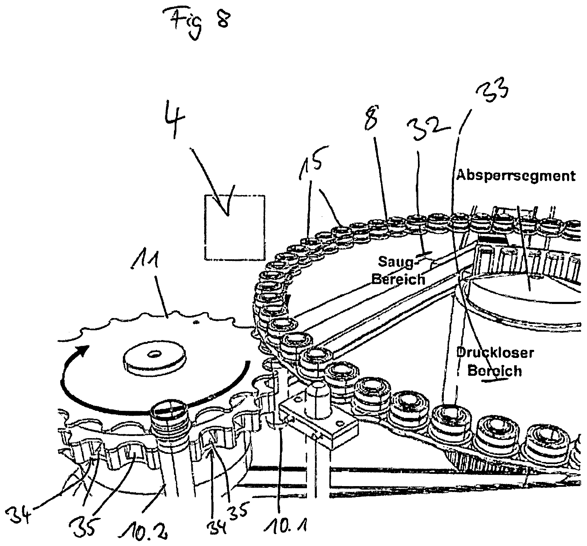

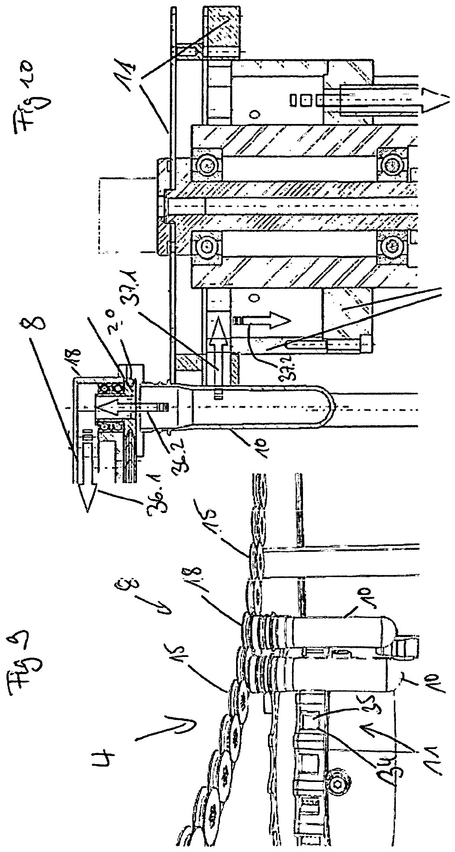

Weiter wird in Figur 8 der Übergabebereich 4 nochmals vergrössert schematisch dargestellt: Dort ist der Saugscheibenkranz 8 mit den rotierenden Saugscheiben 15 gezeigt. Ausserdem ist ein Saugbereich 32 zu erkennen. Dieser Saugbereich 32 ist der Bereich, an dem die Saugscheiben 15, 18 mit entsprechendem Unterdruck versorgt werden. Ausserdem ist ein druckloser Bereich 33 gezeigt. An diesem Punkt werden die Saugscheiben 15, 18 nicht mit entsprechendem Unterdruck versorgt, so dass auch die Preforms 10 nicht gehalten werden können. An dem Übergabebereich 4 wird nun ein Preform 10.1 an das Saugtaschenrad 11 übergeben. Das Saugtaschenrad 11 rotiert hierbei in entgegengesetzter Richtung, wie der Saugscheibenkranz 8. Das Saugtaschenrad 11 weist eine Vielzahl von halbkreisförmigen Ausnehmungen 34 auf. Diese Ausnehmungen dienen der Aufnahme der Preforms 10.2. Die Ausnehmungen 34 weisen auch entsprechend eine Öffnung 35 auf. Die Öffnung 35 dient dazu, dass ein im Inneren des Saugtaschenrades 11 herrschender Unterdruck dazu dient, dass das Preform 10.2 beispielsweise an die Ausnehmung herangezogen und gehalten wird, solange das Preform 10.2 gehalten werden soll. Die Übergabe der Preforms vom Saugscheibenkranz 8 auf das Saugtaschenrad 11 ist synchronisiert. Dies bedeutet, dass eine synchrone Übergabe der Preforms vom rotierenden Saugscheibenkranz 8 auf das Saugtaschenrad 11 erfolgt. Figur 9 zeigt nochmals eine Seitenansicht von schräg unten auf einen Teil eines Saugscheibenkranzes 8. In erster Linie sind dort Saugscheibenräder 15 zu erkennen, welche keine Preforms 10 aufweisen oder ein Saugscheibenrad 18, welches ein Preform 10 aufweist. Der Übergabebereich 4 ist derart gestaltet, dass das Preform 10 an das Saugtaschenrad 11 und die entsprechenden Ausnehmungen 34 mit den entsprechenden Öffnung 35 herangeführt wird, als dass ein fliessender Übergang zwischen dem Saugscheibenkranz 8 und dem Saugtaschenrad 11 erfolgen kann.

In Figur 10 ist nochmals geschnitten dargestellt, wie die Übergabe im Einzelnen passiert. Zunächst ist der Saugscheibenkranz 8, insbesondere eine Preform-haltende Saugscheibe 18 geschnitten gezeigt. Das Preform 10 wird wie durch die Pfeile 36.1, 36.2 vereinfacht dargestellt, zunächst an die Saugscheibe 18 herangezogen. Das rotierende Saugtaschenrad 11 wird an das Preform herangeführt, bis der Unterdruck im Inneren des Saugtaschenrads 11, wie er durch die Pfeile 37.1, 37.2 symbolisch dargestellt wird, das Preform 10 ausreichend an sich herangezogen hat. In dem Augenblick wird der Unterdruck der Saugscheibe 18 abgestellt. Nach dem Abstellen des Unterdrucks der Saugscheibe 18 wird das Preform 10 nur noch vom Saugtaschenrad 11 gehalten.

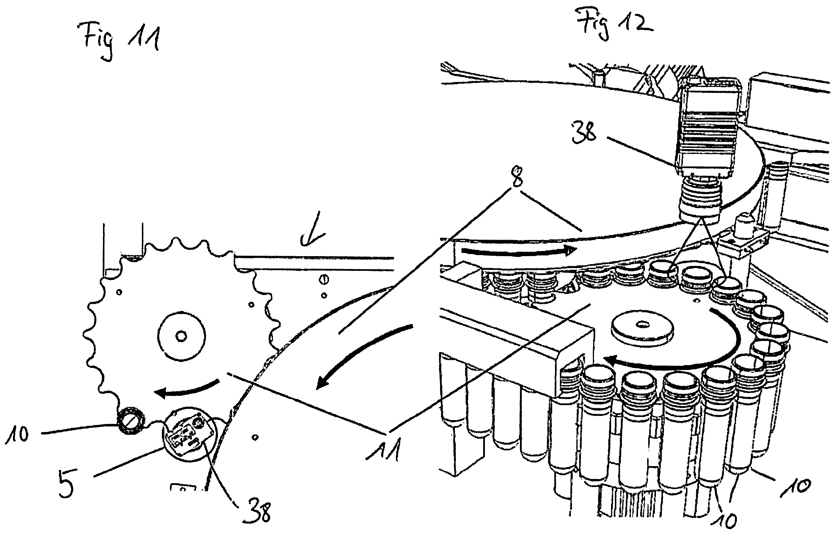

Figur 11 zeigt eine Draufsicht auf den Übergabebereich 4 von oben. Dort ist auch ein zweiter Kamera-Aufnahmebereich 5 zu erkennen. Dieser zweite Kamera-Aufnahmebereich 5 besteht in der Regel aus einer Hochgeschwindigkeitskamera 38. Durch die Übergabe wird auch gleichzeitig ein Umgreifen des Preforms 10 erreicht. Die Kamera 38 kann dann eine Aufnahme der freien Mündungspartie des Preforms 10 durchführen und an eine nicht näher beschriebene Software versenden, welche dann aufgrund von hinterlegten fehlerfreien Bildern und speziellen Prüfalgorithmen einen Abgleich tätigt und entscheidet, ob es sich um ein fehlerfreies Preform 10 oder ein fehlerhaftes Preform 10 handelt. Nachdem die nicht näher beschriebene Software eine entsprechende Entscheidung getroffen hat, werden die fehlerhaften Preforms 10 aussortiert.

Figur 12 zeigt die gleiche Ansicht nach Figur 11 aus einer anderen Perspektive. Daher werden auch die Bezugsziffern entsprechend doppelt vergeben.

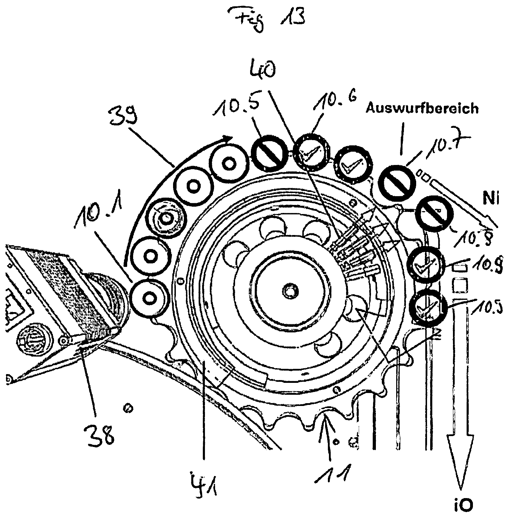

In Figur 13 ist nochmals eine teilweise geschnittene Draufsicht auf ein Saugtaschenrad 11 und eine Hochgeschwindigkeitskamera 38 gezeigt. Die Hochgeschwindigkeitskamera 38 erfasst ein Bild des Mündungsbereichs der Preform 10.1. Der Pfeil 39 soll die benötigte Zeit bis zur Bildauswertung darstellen. Am Ende des Pfeils 39 entscheidet eine nicht näher beschriebene Software darüber, ob es sich, wie beispielsweise bei der Preform 10.5 um eine fehlerhafte Preform handelt oder um eine nicht fehlerhafte Preform, wie beispielsweise mit 10.6 gezeigt. Ausserdem ist durch die geschnittene Draufsicht auf das Saugtaschenrad zu erkennen, wie sequentiell aktivierbare Auswurfdüsen 40 dazu dienen, fehlerhafte Preforms 10.7 und 10.8 entsprechend auszusortieren und vom Saugtaschenrad 11 wegzuschiessen. Die fehlerhaften 10.7, 10.8 werden dann in ein entsprechendes Behältnis aussortiert. Die nicht fehlerhaften Preforms 10.9 werden weitertransportiert, bis sie aufgrund des Unterdruckabfalls des Saugtaschenrades 11 vom Saugtaschenrad 11 abfallen und auf eine entsprechendes Transportband zur weiteren Verwendung abgeführt werden. Aussen ist ein Pfeil 41 gezeigt, welcher den Saugbereich innerhalb des Saugtaschenrades 11 aufzeigen soll. Die Funktion und Aufgabe des Saugtaschenrades 11 beschränkt sich nicht nur auf die Übernahme der Preforms 10 von dem Saugscheibenkranz 8, sondern soll auch vielmehr ein Ausscheiden der fehlerhaften Preforms 10.7, 10.8, 10.5 erfolgen. Dazu werden stationär angeordnete und sequenziell aktivierte Druckluft-Auswerfdüsen (40) eingesetzt. Diese bedeutet im Einzelnen, dass ein Aufheben des Unterdrucks in der Saugtasche und ein Auswerfimpuls erzeugt wird. Der Aktivierungszeitpunkt pro Düse ist synchronisiert mit der Bewegung des Saugtaschenrades 11. Es ist aber auch alternativ denkbar, dass mitdrehende Saugtaschen spezifische Druckluft-Auswurfdüsen eingesetzt werden oder ein mechanischer Antrieb anstelle der Druckluft-Auswurfdüsen einsetzt wird. Vorteilhaft hierbei ist der Umstand, dass die Preforms 10 nicht formschlüssig umgriffen werden müssen, was besonders materialschonend ist und hohe Auswurftaktraten erlaubt.

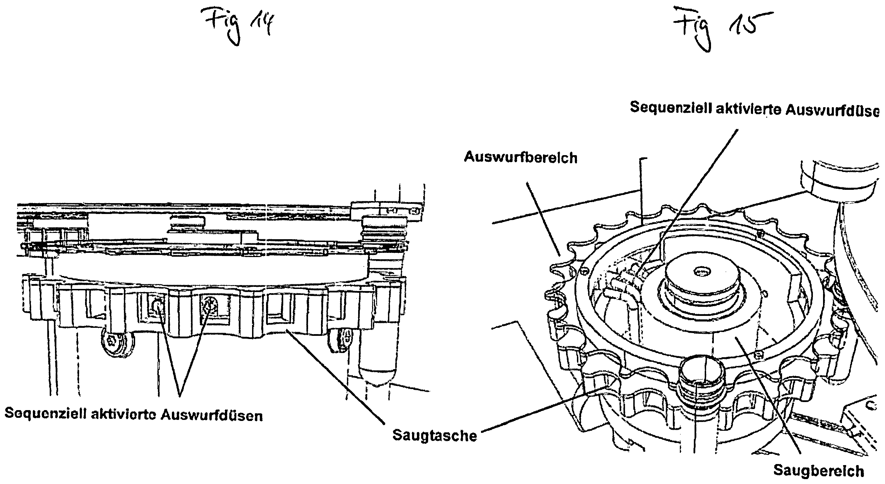

In der Figur 14 ist nochmals eine Seitenansicht des Saugtaschenrades 11 gezeigt. In der Seitenansicht ist gut zu erkennen, wie die sequenziell aktivierbaren Auswurfdüsen 40 innerhalb der Öffnungen 35 gezeigt sind. Figur 15 zeigt eine teilweise geschnittene Seitenansicht von schräg oben auf das Saugtaschenrad 11. Dort ist gut zu erkennen, wie die sequenziell aktivierbaren Auswurfdüsen 40 stationär innerhalb des Saugtaschenrades 11 angebracht sind und in einem bestimmten Auswurfbereich bei fehlerhaften Preforms aktiviert werden können.

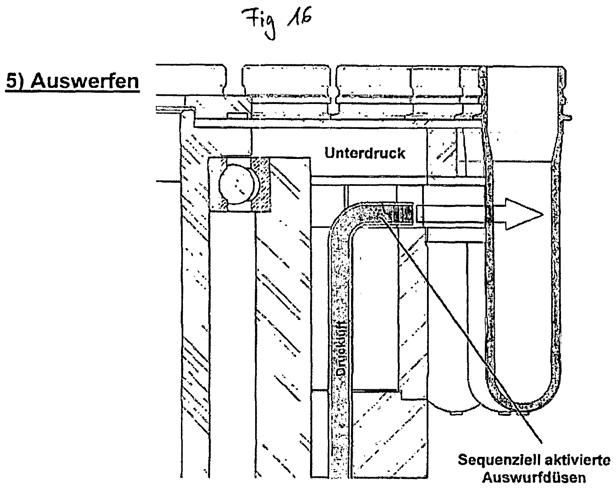

Figur 16 zeigt nun noch eine geschnittene Seitenansicht eines Teilbereichs eines Saugtaschenrades 11. Dort ist eine geschnittene Seitenansicht einer sequenziell aktivierbaren Auswurfdüse 40 zu erkennen. Das Saugtaschenrad 11 ist derart ausgebildet, dass die feststehenden Auswurfdüsen der Rotationsbewegung nicht im Wege stehen.

Vorteilhaft einer hier beschriebenen Erfindungsidee ist eine mögliche High-Speed-Anwendung von 36.000 pH bis 100.000 pH. Weiter ist eine hohe Kompaktheit durch das Gesamtlayout und die Modulgrösse erreicht worden. Die enge Teilung für die seitliche Bildaufnahme, welche durch das Rotieren der Preforms auf Saugscheiben erreicht wird, führt zu einer Reduktion der Hauptstromgeschwindigkeit. Ausserdem ist ein selbst reguliertes Eintakten (Staudrucklos-/Taktradlos-/Zwangslos-Synchronisieren) möglich. Ausserdem ist eine dynamische Selbsteinspurung auf den Saugscheiben vorteilhaft zu erreichen. Daneben ist auch ein universeller Saugscheibenkranz für ein breites Preformspektrum ohne Wechselteile möglich.

Die High-Speed-Anwendung ist derart gestaltet, dass die Preforminspektion aus der Sicht der mechanischen Bereitstellung der Preforms für die optische Bilderfassung bei High-Speed-Anwendungen besonders problematisch ist. Die bestehenden Lösungen und Anwendungen arbeiten mehrheitlich im Bereich bis 36.000 pH. Es gibt auch vereinzelte Lösungen bis max. 45.000 pH vereinzelt bis 50.000 pH. Von der Bildverarbeitungsgeschwindigkeit sind auch höhere Verarbeitungstaktraten möglich, da auch Mehrfachkameras eingesetzt werden können. Die Bestrebungen und Bedürfnisse, besonders bei der Inline-Inspektion bei Spritzgiessmaschinen gehen jetzt auf Verarbeitungstaktraten bis zu 100.000 pH hinauf. Diese extrem hohen Geschwindigkeiten und Taktraten machen die mechanische Bereitstellung der Preforms für die optische Bilderfassung sehr anspruchsvoll. Die bestehenden Lösungen und Konzeptionen, welche in dieser Patentanmeldung vorgestellt werden, können diesen Anforderungen gerecht werden.

Für die optische Bilderfassung ist es notwendig, die Objekte der Kamera definiert zu präsentieren. Die Position des Objektes (hier Preforms) muss im Bezug zu der Kamera und im Bezug zum Objektfluss immer bekannt, respektive bestimmbar sein. Dies bedingt, dass die Preforms platzgebunden durch das Inspektions-Modul fahren. Die erste Aufgabe des Inspektionsmodul ist, die Preforms aus einem zugeführten linear geordneten Preformstrom auf die Plätze des Saugscheibenkranzes zentriert anzubringen. Stand der Technik ist, dass dazu eine mechanische Einrichtung notwendig ist. Es ist entweder ein Taktrad mit formatbedingten Taschen oder eine formatspezifische Eintaktspirale üblich. Beide Anwendungen brauchen immer einen zusätzliche Staudruck für das Eintakten. Dieser Staudruck ist bei hohen Taktraten für die Preforms auch nicht besonders schonend. Ausserdem sind es sehr kostspielige mechatronische Einheiten und diese sind formatgebunden. Die vorliegende Erfindung arbeitet ohne Stau und auch ohne einen zusammenhängenden Preformzufuhrstrom.

Die Funktionsweise ist derart, dass die Preforms mit dem Mündungsbereich nach oben gerichtet in einer Reihe zugeführt werden. Sie sind geführt in einer Führung und sie bewegen sich zu der Übergabestelle. Sie sind ohne Staudruck, ungetaktet und falls es sich ergibt auch mit Lücken an diese Übergabestelle heranzubringen. Die Geschwindigkeit des zugeführten Preformstroms ist vorteilsweise so gehalten, dass Sie der geforderten Liefermenge entspricht.

Die Übergabestelle ist der Ort, an der sich der lineare Fluss mit dem Saugscheibenkranz kreuzt. Der Saugscheibenkranz beinhaltet leere rotierende Saugscheiben. Der Unterdruck wird an einen ortsgebundenen Kulisse/ einem Schieber kurz vor dem Kreuzungspunkt in den Saugscheiben aufgebaut. Im Kreuzungspunkt fährt der Saugscheibenkranz über die linear fahrenden Preforms und saugt die Preforms an der Mündungsebene an.

Da die Preforms nicht synchronisiert ankommen, werden sie von den Saugscheiben nicht immer genau in die Achsenmitte angesaugt. Es gibt sicherlich auch vereinzelt den Fall, dass die Preforms genau zwischen zwei Saugscheiben zum liegen kommen. In diesem Fall kann sich das Preform dank der Luftströmung und Reibung an den Führungskanten, sowie der Geschwindigkeitsdifferenz, während der gemeinsamen Überdeckungsstrecke immer noch an eine Saugscheibe anheften. Ist dies trotzdem nicht möglich, dann fallen diese Preforms ab und werden durch das unten befindliche Band dem Preformkreislauf zugeführt. Dies geschieht auch mit den Preforms bei dem Preformüberschuss bei zu hoher Zufuhrmenge.

**Bezugszeichenliste**

| | | | | | |
|---|---|---|---|---|---|
| 1 | Zuführung | 34 | Ausnehmung | 67 | |
| 2 | Selbstzentrierung | 35 | Öffnung | 68 | |
| 3 | erster Kamera-Aufnahmebereich | 36 | Pfeile | 69 | |
| 4 | Übergabebereich | 37 | Pfeil | 70 | |
| 5 | zweiter Kamera-Aufnahmebereich | 38 | Hochgeschwindigkeit skamera | 71 | |
| 6 | Auswurfstation | 39 | Pfeil | 72 | |
| 7 | Behältnis | 40 | Auswurfdüse | 73 | |
| 8 | Saugscheibenkranz | 41 | Pfeil | 74 | |
| 9 | Achse | 42 | | 75 | |
| 10 | Preform | 43 | | 76 | |
| 11 | Saugtaschenrad | 44 | | 77 | |
| 12 | Beleuchtungsstation | 45 | | 78 | |
| 13 | Abtransportband | 46 | | 79 | |
| 14 | Preform-Zufuhr | 47 | | | |
| 15 | leere rotierende Saugscheibe | 48 | | | |
| 16 | Synchronisationsberei ch | 49 | | K | Kontrolleinheit |
| 17 | Preform | 50 | | | |
| 18 | Preform haltende Saugscheiben | 51 | | | |
| 19 | Richtungspfeil | 52 | | | |
| 20 | Abwälzband | 53 | | | |
| 21 | Lufteinlass | 54 | | | |
| 22 | Luftrichtungspfeil | 55 | | | |
| 23 | Hochgeschwindigkeits kamera | 56 | | | |
| 24 | Leuchtröhren | 57 | | | |
| 25 | Vlies | 58 | | | |
| 26 | Kamerasichtwinkel | 59 | | | |
| 27 | Stromflussrichtung | 60 | | | |
| 28 | Preform | 61 | | | |
| 29 | Hochgeschwindigkeits kamera | 62 | | | |
| 30 | Lichtquelle | 63 | | | |
| 31 | Stromflussrichtung | 64 | | | |
| 32 | Saugbereich | 65 | | | |
| 33 | druckloser Bereich | 66 | | | |

## Patentansprüche

1. Verfahren zur Kontrolle der Qualität von PET-Flaschen-Vorformlingen, **gekennzeichnet durch** folgende Schritte:
- synchronisierte Aufnahme der Vorformlinge durch Ansaugen eines Stirnbereiches;
- dynamisches selbstzentrieren der Vorformlinge durch Rotation und Zentrierbanden;
- Rotieren der Vorformlinge um die eigene Längsachse;
- Vorbeiführen der rotierenden Vorformlinge auf einer Seite an zumindest einer ersten Hochgeschwindigkeitskamera zur Kontrolle eines Längsbereiches der Vorformlinge und auf einer anderen Seite an einer Beleuchtungsstation;
- Umgreifen der Vorformlinge durch Ansaugen des Längsbereiches;
- Vorbeiführen der Vorformlinge an zumindest einer weiteren Hochgeschwindigkeitskamera zur Kontrolle des Stirnbereiches der Vorformlinge.

2. Vorrichtung zur Ermittlung von fehlerhaften PET-Flaschen-Vorformlingen durch eine optische Erfassungseinrichtung, **gekennzeichnet durch** eine Saugscheibe, wobei die Saugscheibe rotiert und geeignet ist, angelieferte Vorformlinge zentriert anzusaugen, wobei
eine synchronisierte Aufnahme der Vorformlinge durch Ansaugen eines Stirnbereiches und ein dynamisches Selbstzentrieren der Vorformlinge durch Rotation und Zentrierbanden erfolgt und die Vorformlinge um die eigene Längsachse rotieren und die rotierenden Vorformlinge auf einer Seite an zumindest einer ersten Hochgeschwindigkeitskamera zur Kontrolle eines Längsbereiches der Vorformlinge und auf einer anderen Seite an einer Beleuchtungsstation vorbeigeführt werden und Vorformlinge durch Ansaugen des Längsbereiches umgegriffen werden und die Vorformlinge an zumindest einer weiteren Hochgeschwindigkeitskamera zur Kontrolle des Stirnbereiches der Vorformlinge vorbeigeführt werden.

3. Vorrichtung nach Anspruch 2, **dadurch gekennzeichnet, dass** eine Mehrzahl von Saugscheiben an einem Saugscheibenkranz angeordnet sind.

4. Rechnerverfahren für eine Vorrichtung zur Ermittlung von fehlerhaften PET-Flaschen-Vorformlingen, zur synchronisierten Steuerung eines Saugscheibenkranzes, eines Saugtaschenrades, einer zumindest ersten Hochgeschwindigkeitskamera, einer zweiten Hochgeschwindigkeitskamera und einer Luftdruckauswerfdüse **gekennzeichnet durch** folgende Schritte:
- die erste Hochgeschwindigkeitskamera erfasst zumindest eine Bilddatei der Längsachse eines rotierenden Vorformlings
- Senden der Bilddatei an einen Rechner
- Auswerten der Bilddatei in dem Rechner
- der Vorformling wird an das Saugtaschenrad übergeben, sodass der Vorformling nun an seiner Längsseite gehalten wird
- die zweite Hochgeschwindigkeitskamera erfasst zumindest eine weitere Bilddatei der Stirnseite des Vorformlings
- Senden der weiteren Bilddatei an den Rechner
- Auswerten der weiteren Bilddatei
- der Rechner betätigt die Luftdruckauswerfdüse, wenn ein fehlerhafter Vorformling durch die eine Bilddatei und/oder die weitere Bilddatei detektier wird.

## Claims

1. A method for checking the quality of PET bottle preforms, **characterised by** the following steps:
- synchronised uptake of the preforms by suction on an end region;
- dynamic self-centring of the preforms by rotation and centring belts;
- rotating of the preforms about their own longitudinal axis;
- guiding the rotating preforms on one side past at least a first high-speed camera for checking a longitudinal region of the preforms and on another side past an illumination station;
- circumferentially gripping the preforms by suction on the longitudinal region;
- guiding the preforms past at least one further high-speed camera for checking the end region of the preforms.

2. A device for ascertaining faulty PET bottle preforms by an optical acquisition means, **characterised by** a suction disc, wherein the suction disc rotates and is suitable for suctioning delivered preforms in a centred manner, wherein
synchronised uptake of the preforms by suction on an end region and dynamic self-centring of the preforms by rotation and centring belts takes place, and the preforms rotate about their own longitudinal axis and the rotating preforms are guided on one side past at least a first high-speed camera for checking a longitudinal region of the preforms and on another side past an illumination station, and preforms are gripped circumferentially by suction on the longitudinal region, and the preforms are guided past at least one further high-speed camera for checking the end region of the preforms.

3. A device according to Claim 2, **characterised in that** a plurality of suction discs are arranged on a suction disc ring.

4. A computer method for a device for ascertaining faulty PET bottle preforms, for the synchronised control of a suction disc ring, a suction pocket wheel, an at least first high-speed camera, a second high-speed camera and an air-pressure ejection nozzle, **characterised by** the following steps:
- the first high-speed camera acquires at least one image file of the longitudinal axis of a rotating preform
- transmitting the image file to a computer
- evaluating the image file in the computer
- the preform is transferred to the suction pocket wheel, so that the preform is now held on its long side
- the second high-speed camera acquires at least one further image file of the end face of the preform
- transmitting the further image file to the computer
- evaluating the further image file
- the computer actuates the air-pressure ejection nozzle if a faulty preform is detected through the one image file and/or the further image file.

## Revendications

1. Procédé pour contrôler la qualité de préformes de bouteilles en PET, **caractérisé par** les étapes suivantes:
- réception synchronisée des préformes par aspiration d'une zone frontale;
- auto-centrage dynamique des préformes par rotation et des bandes de centrage;
- mise en rotation des préformes autour de leur propre axe longitudinal;
- amenée des préformes en rotation d'un côté devant au moins une première caméra à grande vitesse pour contrôler une région longitudinale des préformes et d'un autre côté devant un poste d'éclairage;
- saisie par derrière des préformes par aspiration de la région longitudinale;
- amenée des préformes devant au moins une autre caméra à grande vitesse pour contrôler la zone frontale des préformes.

2. Dispositif de détection de préformes de bouteilles en PET défectueuses par un dispositif de détection optique, **caractérisé par** un disque d'aspiration, le disque d'aspiration étant mis en rotation et convenant pour aspirer les préformes amenées de manière centrée, une réception synchronisée des préformes ayant lieu par aspiration d'une région frontale et un auto-centrage dynamique des préformes par rotation et des bandes de centrage et les préformes tournant autour de leur propre axe longitudinal et les préformes en rotation étant amenées d'un côté devant au moins une première caméra à grande vitesse pour contrôler une zone longitudinale des préformes et d'un autre côté devant un poste d'éclairage et les préformes étant saisies par derrière par aspiration de la zone longitudinale et les préformes étant amenées devant au moins une autre caméra à grande vitesse pour contrôler la zone frontale des préformes.

3. Appareil selon la revendication 2, **caractérisé par le fait qu'**une pluralité de disques d'aspiration sont disposés sur une couronne de disques d'aspiration.

4. Procédé de calcul pour un dispositif de détection de préformes de bouteilles en PET défectueuses pour la commande synchronisée d'une couronne de disques d'aspiration, d'une roue à poches d'aspiration, d'au moins une première caméra à grande vitesse, d'une deuxième caméra à grande vitesse et d'une buse d'éjection d'air comprimé, **caractérisé par** les étapes suivantes:
- la première caméra à grande vitesse capture au moins un fichier d'images de l'axe longitudinal d'une préforme en rotation,
- envoi du fichier d'images à un ordinateur,
- évaluation du fichier d'images dans l'ordinateur,
- la préforme est transmise à la roue à poches d'aspiration, de sorte que la préforme soit alors maintenue de son côté longitudinal,
- la deuxième caméra à grande vitesse capture au moins un autre fichier d'images du côté frontal de la préforme,
- envoi de l'autre fichier d'images à l'ordinateur,
- évaluation de l'autre fichier d'images,
- l'ordinateur actionne la buse d'éjection d'air comprimé lorsqu'une préforme défectueuse est détectée par l'un fichier d'images et/ou l'autre fichier d'images.
